# EUROPÄISCHE PATENTSCHRIFT

(11) **EP 3 867 553 B1**
(45) Veröffentlichungstag und Bekanntmachung des Hinweises auf die Patenterteilung: **23.08.2023**
(21) Anmeldenummer: 19786564.5
(22) Anmeldetag: 09.10.2019
(51) Int. Cl.: F16L 3/04, F16B 15/00, H02G 3/32

(54) **KLEMMVORRICHTUNG**
CLAMPING DEVICE
DISPOSITIF DE SERRAGE

(30) Priorität: 17.10.2018 AT 508982018
(43) Veröffentlichungstag der Anmeldung: 25.08.2021
(73) Patentinhaber: Veidinger, Anita, 1210 Wien (AT)
(72) Erfinder: Veidinger, Anita, 1210 Wien (AT)
(74) Vertreter: KLIMENT & HENHAPEL
(86) Internationale Anmeldenummer: PCT/EP2019/077382
(87) Internationale Veröffentlichungsnummer: WO 2020/078802

(56) Entgegenhaltungen:
- DE-A1- 2 449 568
- DE-B- 1 195 564
- GB-A- 843 061
- US-A- 2 885 168

## Beschreibung

Die Erfindung betrifft eine Klemmvorrichtung zur Befestigung von Rohr- oder Schlauchleitungen auf einem Baukörper mit zwei seitlichen, bandförmigen Klemmschenkeln, die parallel zueinander ausgerichtet sind und zwei einander zugewandte Klemmflächen zur Aufnahme der Rohr- oder Schlauchleitung aufweisen, wobei die beiden seitlichen Klemmschenkel über einen bandförmigen Mittelteil verbunden sind und an ihren freien Enden jeweils zumindest einen nagelförmigen Fortsatz aufweisen, und die Scheitellinien der seitlichen Biegebereiche einen größeren Abstand zu den nagelförmigen Fortsätzen aufweisen als die Scheitellinie des mittleren Biegebereiches, gemäß dem Oberbegriff von Anspruch 1.

Eine Klemmvorrichtung der genannten Art wurde etwa in der DE 24 49 568 beschrieben. Weitere Klemmvorrichtungen wurden in der US 2 885 168 A, der DE 11 95 564 und der GB 843 061 beschrieben. Klemmvorrichtungen der genannten Art dienen der Befestigung von Rohr- oder Schlauchleitungen auf Baukörper wie beispielsweise Trockenbauwände, insbesondere Gipskartonwände. Die Klemmvorrichtung wird dabei auf die zu befestigende Rohr- oder Schlauchleitung gesteckt, sodass die einander zugewandten Klemmflächen der Klemmschenkel an der Rohr- oder Schlauchleitung anliegen, und die nagelförmigen Fortsätze mit Schlägen auf den Mittelteil der Klemmvorrichtung in den Baukörper eingetrieben. Gattungsgemäße Klemmvorrichtungen werden daher auch als Schlagschellen bezeichnet und die Befestigung der Rohr- oder Schlauchleitungen mittels Schlagschellen auch als Schlagmontage. Schlagschellen der genannten Art werden im Zuge der Herstellung zumeist aus einem Stahlblech gestanzt und in weiterer Folge zurechtgebogen, wobei der Biegeradius des Mittelteiles auch den Abstand der beiden Klemmschenkel festlegt und somit auf den Durchmesser der zu befestigenden Rohr- oder Schlauchleitung abgestimmt werden muss.

Dabei haben sich in der Praxis einige Nachteile gezeigt. So muss der Mittelteil aufgrund seiner Funktion als Schlagschulter über eine ausreichende strukturelle Stabilität verfügen, um die über den Schlag eingebrachten Kräfte an die nagelförmigen Fortsätze weiterzuleiten, ohne dabei Deformationsverluste zu erleiden. Diese Anforderung wird bei zunehmendem Durchmesser der Rohr- oder Schlauchleitung immer schwieriger, da der Biegeradius des Mittelteiles größer wird und eine Ableitung der zentral auf den Mittelteil eingebrachten Schlagkräfte auf die seitlichen Klemmschenkel und deren nagelförmige Fortsätze immer schwieriger wird.

Eine Lösung besteht darin, die Materialstärke des Stahlblechs zu erhöhen, wodurch aber die Kosten einer Schlagschelle erhöht werden. In der AT 456.760 wird daher auch vorgeschlagen, einen nach außen hervorstehenden, gekrümmten, durchgängigen Wulst im Mittelteil vorzusehen, der der Krümmung des gekrümmten Mittelteils folgt, und jeder Klemmschenkel drei nagelförmige Fortsätze mit einem zentral angeordneten Nagel aufweist, wobei jedes der Enden des Wulstes mit den zentral angeordneten Nägeln fluchtet. Diese Maßnahmen erhöhen zwar die strukturelle Stabilität des Mittelteils, lösen aber noch immer nicht das grundsätzliche Problem, dass die Ableitung der zentral auf den Mittelteil eingebrachten Schlagkräfte auf die seitlichen Klemmschenkel und deren nagelförmige Fortsätze bei zunehmendem Leitungsdurchmesser immer schwieriger wird.

Es besteht daher das Ziel der Erfindung darin Klemmvorrichtungen bereit zu stellen, die bei einer Schlagmontage auch bei zunehmendem Leitungsdurchmesser eine unveränderte Ableitung der auf den Mittelteil eingebrachten Schlagkräfte auf die seitlichen Klemmschenkel und deren nagelförmige Fortsätze sicherstellt, ohne dabei die Herstellungskosten der Klemmvorrichtung zu erhöhen.

Diese Ziele werden durch die Merkmale von Anspruch 1 erreicht. Anspruch 1 bezieht sich auf eine Klemmvorrichtung zur Befestigung von Rohr- oder Schlauchleitungen auf einem Baukörper mit zwei seitlichen, bandförmigen Klemmschenkeln, die parallel zueinander ausgerichtet sind und zwei einander zugewandte Klemmflächen zur Aufnahme der Rohr- oder Schlauchleitung aufweisen, wobei die beiden seitlichen Klemmschenkel über einen bandförmigen Mittelteil verbunden sind und an ihren freien Enden jeweils zumindest einen nagelförmigen Fortsatz aufweisen, und die Klemmschenkel jeweils über seitliche Biegebereiche in einen mittleren Biegebereich des Mittelteils übergehen, wobei die Scheitellinien der seitlichen Biegebereiche und des mittleren Biegebereiches jeweils parallel zur Querachse der Klemmschenkel verlaufen, und die Scheitellinien der seitlichen Biegebereiche einen größeren Abstand zu den nagelförmigen Fortsätzen aufweisen als die Scheitellinie des mittleren Biegebereiches. Erfindungsgemäß wird hierfür vorgeschlagen, dass die beiden Klemmschenkel auf ihren einander zugewandten Klemmflächen jeweils einen den Abstand der Klemmflächen verringernden Klemmvorsprung zum Aufstecken auf die Rohr- oder Schlauchleitung aufweisen, der jeweils als nutförmige Biegezone des jeweiligen Klemmschenkels ausgeführt ist, wobei die Scheitellinien der nutförmigen Biegezonen der beiden Klemmschenkel einander zugewandt sind. Die beiden seitlichen Biegebereiche überragen somit den mittleren Biegebereich und bilden die Schlagschultern für die Schlagmontage. Die Verbindung der beiden Klemmschenkel wird über den mittleren Biegebereich hergestellt, der aber von den seitlichen Biegebereichen überragt wird und bei der Schlagmontage somit nicht getroffen wird. Die erfindungsgemäße Ausführung trennt somit die verbindende Funktion des Mittelteils von seiner Funktion als Schlagschulter, indem einerseits die seitlichen Biegebereiche als Schlagschultern vorgesehen sind und der mittlere Biegebereich eine verbindende Funktion erfüllt. Die Biegeradien der jeweiligen Biegebereiche können aber nun auf ihre jeweilige Funktion abgestimmt werden. So wird der Biegeradius des mittleren Biegebereiches so gewählt werden, dass der mit zunehmendem Durchmesser der zu befestigenden Rohr- oder Schlauchleitungen wachsende Abstand der beiden Klemmschenkel optimal überbrückt wird, indem er entsprechend erhöht wird, und der Biegeradius der seitlichen Biegebereiche wird so gewählt werden, dass sie bei der Schlagmontage optimal belastbar sind, indem er entsprechend klein gewählt wird. Somit kann auch bei zunehmendem Leitungsdurchmesser eine unveränderte Ableitung der auf den Mittelteil eingebrachten Schlagkräfte auf die seitlichen Klemmschenkel und deren nagelförmige Fortsätze sichergestellt werden.

Die Längsachse eines ersten bandförmigen Klemmschenkels führt dabei von seinem freien Ende, das den zumindest einen nagelförmigen Fortsatz trägt, in Richtung eines ersten seitlichen Biegebereiches, und geht dort in die Längsachse des bandförmigen Mittelteils über, die wiederum im zweiten seitlichen Biegebereich in die Längsachse des zweiten bandförmigen Klemmschenkels übergeht. Die Querachse der Klemmschenkel steht jeweils senkrecht zu dieser Längsachse.

Der Klemmvorsprung kann verwendet werden, um die Klemmvorrichtung auf der zu befestigenden Rohr- oder Schlauchleitung festzuklemmen, noch bevor die eigentliche Befestigung am Baukörper erfolgt, beispielsweise im Zuge des Abwickelns der Rohr- oder Schlauchleitung von einer Vorratsrolle. Die Klemmvorsprünge verhindern dabei ein Verrutschen oder Abfallen der Klemmvorrichtungen im Zuge der weiteren Montagearbeiten.

Erfindungsgemäß ist der Klemmvorsprung jeweils als nutförmige Biegezone des jeweiligen Klemmschenkels ausgeführt, wobei die Scheitellinien der nutförmigen Biegezonen der beiden Klemmschenkel einander zugewandt sind. Auch die Klemmvorsprünge können somit durch einen Biegevorgang gefertigt werden, wobei sich an den einander abgewandten Außenflächen der Klemmschenkel jeweils eine parallel zur Querachse der Klemmschenkel verlaufende, nutförmige Vertiefung bildet.

Vorzugsweise weisen die seitlichen Biegebereiche einen Biegewinkel von 180° auf. Werden die nagelförmigen Fortsätze nach unten weisend angenommen, so werden die seitlichen Biegebereiche daher jeweils durch einen aufwärts verlaufenden Klemmschenkelabschnitt und einen hierzu parallelen, abwärts verlaufenden Mittelteilabschnitt gebildet. Die obersten Punkte der seitlichen Biegebereiche bilden dabei die jeweilige Scheitellinie. Bei einer Schlagbelastung erfolgt daher die Krafteinleitung in den jeweiligen Klemmschenkel annähernd fluchtend mit den nagelförmigen Fortsätzen, was eine optimale Krafteinbringung für das Eintreiben der nagelförmigen Fortsätze darstellt.

Des Weiteren hat es sich als vorteilhaft erwiesen, wenn die seitlichen Biegebereiche jeweils über einen verbindenden Biegebereich in den mittleren Biegebereich übergehen, wobei die Scheitellinien der verbindenden Biegebereiche einen geringeren Abstand zu den nagelförmigen Fortsätzen aufweisen als die Scheitellinie des mittleren Biegebereiches. Werden die nagelförmigen Fortsätze wiederum nach unten weisend angenommen, so liegt die Scheitellinie des mittleren Biegebereiches somit oberhalb der Scheitellinien der verbindenden Biegebereiche, aber unterhalb der Scheitellinien der seitlichen Biegebereiche.

Insbesondere ist dabei vorteilhaft, wenn der Biegeradius der seitlichen Biegebereiche kleiner ist als der Biegeradius der verbindenden Biegebereiche, und der Biegeradius der verbindenden Biegebereiche kleiner ist als der Biegeradius des mittleren Biegebereiches. Auf diese Weise wird trotz hoher Belastbarkeit in Schlagrichtung eine vorteilhafte Biegefähigkeit der Klemmvorrichtung in einer zu den Klemmschenkeln senkrechten Richtung erreicht. Diese Biegefähigkeit bietet den Vorteil, dass sich die Klemmvorrichtung an den Durchmesser der Rohr- oder Schlauchleitungen anpassen kann und die Fertigungstoleranzen für die Klemmvorrichtung insbesondere hinsichtlich ihrer Biegeradien daher vergrößert werden können. Des Weiteren weist der mittlere Biegebereich einen Biegeradius auf, der der Hälfte des Normalabstandes der beiden Klemmflächen entspricht.

Die Erfindung wird in weiterer Folge anhand von Ausführungsbeispielen mithilfe der beiliegenden Figuren näher erläutert. Es zeigen hierbei die
Fig. 1 eine Darstellung einer Ausführungsform der erfindungsgemäßen Klemmvorrichtung mit einer aufgenommenen Rohr- oder Schlauchleitung,
Fig. 2 eine Schnittansicht durch die Schnittebene A-A gemäß der Fig. 1, und die
Fig. 3 die Ausführungsform der erfindungsgemäßen Klemmvorrichtung gemäß Fig. 1 in Gebrauchslage mit einer an einem Baukörper befestigten Rohr- oder Schlauchleitung, und die
Fig. 4 eine weitere Ausführungsform einer erfindungsgemäßen Klemmvorrichtung für zwei Rohr- oder Schlauchleitungen.

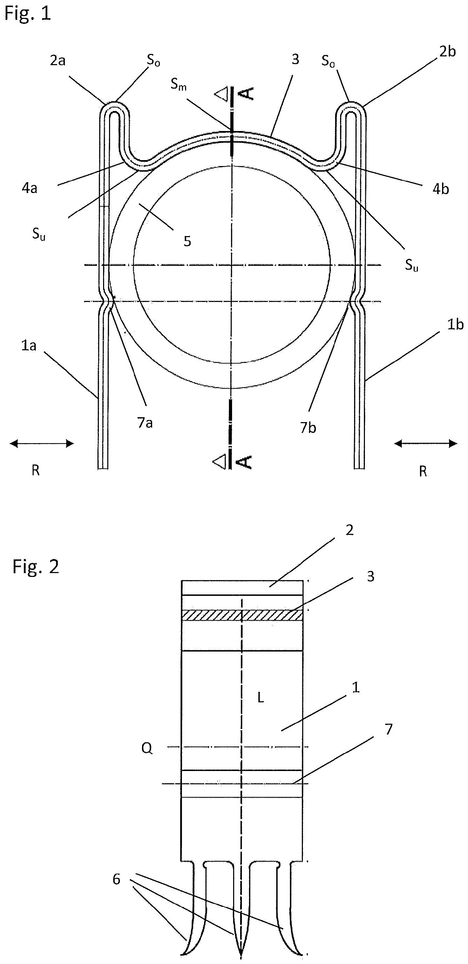

Zunächst wird auf die Fig. 1 Bezug genommen, die eine Ausführungsform der erfindungsgemäßen Klemmvorrichtung mit zwei seitlichen, bandförmigen Klemmschenkeln 1a, 1b und eine zwischen den beiden Klemmschenkeln 1a, 1b aufgenommene Rohr- oder Schlauchleitung 5 zeigt. Die beiden Klemmschenkeln 1a, 1b weisen eine Längsachse L auf, die von einem freien Ende eines ersten Klemmschenkels 1a, das im gezeigten Ausführungsbeispiel drei nagelförmigen Fortsätze 6 trägt (siehe auch Fig. 2), in Richtung eines ersten seitlichen Biegebereiches 2a führt, und dort in die Längsachse L eines bandförmigen Mittelteils 3 übergeht, die wiederum in einem zweiten seitlichen Biegebereich 2b in die Längsachse L des zweiten bandförmigen Klemmschenkels 1b übergeht. Auch der zweite Klemmschenkel 1b trägt im gezeigten Ausführungsbeispiel drei nagelförmige Fortsätze 6, wobei der jeweilige mittlere Fortsatz 6 auch etwas länger als die beiden seitlichen Fortsätze 6 ausgeführt sein kann. Die Querachse Q der Klemmschenkel 1 steht jeweils senkrecht zu dieser Längsachse L. Klemmvorrichtungen der gezeigten Art können im Zuge der Herstellung beispielsweise aus einem Stahlblech gestanzt und in weiterer Folge zurechtgebogen werden, wie in weiterer Folg erläutert wird.

Wie der Fig. 1 entnommen werden kann, weisen die seitlichen Biegebereiche 2 einen Biegewinkel von 180° auf. Werden die nagelförmigen Fortsätze 6, wie in der Fig. 1 dargestellt, nach unten weisend angenommen, so werden die seitlichen Biegebereiche 2 daher jeweils durch einen aufwärts verlaufenden Klemmschenkelabschnitt und einen hierzu parallelen, abwärts verlaufenden Mittelteilabschnitt gebildet. Die obersten Punkte der seitlichen Biegebereiche 2 bilden dabei die jeweilige Scheitellinie Sₒ der seitlichen Biegebereiche 2. Die Scheitellinien Sₒ der seitlichen Biegebereiche 2 weisen dabei einen größeren Abstand zu den nagelförmigen Fortsätzen 6 auf, als die Scheitellinie Sₘ des mittleren Biegebereiches 3. Die Scheitellinien Sₒ der seitlichen Biegebereiche 2 liegen somit oberhalb der Scheitellinie Sₘ des mittleren Biegebereiches 3.

Wie der Fig. 1 ferner entnommen werden kann, gehen die seitlichen Biegebereiche 2a, 2b jeweils über einen verbindenden Biegebereich 4a, 4b in den mittleren Biegebereich 3 über, wobei die Scheitellinien Sᵤ der verbindenden Biegebereiche 4 einen geringeren Abstand zu den nagelförmigen Fortsätzen 6 aufweisen als die Scheitellinie Sₘ des mittleren Biegebereiches 3. Die Scheitellinie Sₘ des mittleren Biegebereiches 3 liegt somit oberhalb der Scheitellinien Sᵤ der verbindenden Biegebereiche 4, aber unterhalb der Scheitellinien Sₒ der seitlichen Biegebereiche 2.

Des Weiteren ist aus der Fig. 1 ersichtlich, dass gemäß der gezeigten Ausführungsform der Biegeradius der seitlichen Biegebereiche 2 kleiner ist als der Biegeradius der verbindenden Biegebereiche 4, und der Biegeradius der verbindenden Biegebereiche 4 wiederum kleiner ist als der Biegeradius des mittleren Biegebereiches 3. Auf diese Weise wird trotz hoher Belastbarkeit in Schlagrichtung eine vorteilhafte Biegefähigkeit der Klemmvorrichtung in einer zu den Klemmschenkeln 1 senkrechten Richtung R erreicht. Diese Biegefähigkeit bietet den Vorteil, dass sich die Klemmvorrichtung an den Durchmesser der Rohr- oder Schlauchleitungen 5 anpassen kann und die Fertigungstoleranzen für die Klemmvorrichtung insbesondere hinsichtlich ihrer Biegeradien daher vergrößert werden können.

Diese Biegefähigkeit kann aber auch ausgenutzt werden, indem gemäß der gezeigten Ausführungsform der Fig. 1-3 die beiden Klemmschenkel 1 auf ihren einander zugewandten Klemmflächen jeweils einen den Abstand der Klemmflächen verringernden Klemmvorsprung 7 aufweisen. Dieser Klemmvorsprung 7 kann verwendet werden, um die Klemmvorrichtung auf der zu befestigenden Rohr- oder Schlauchleitung 5 festzuklemmen, noch bevor die eigentliche Befestigung am Baukörper 8 erfolgt, beispielsweise im Zuge des Abwickelns der Rohr- oder Schlauchleitung 5 von einer Vorratsrolle. Die Klemmvorsprünge 7 verhindern dabei ein Verrutschen oder Abfallen der Klemmvorrichtungen im Zuge der weiteren Montagearbeiten.

In der gezeigten Ausführungsform der Fig. 1-3 sind die Klemmvorsprünge 7a, 7b jeweils als nutförmige Biegezone des jeweiligen Klemmschenkels 1a, 1b ausgeführt, wobei die Scheitellinien der nutförmigen Biegezonen 7a, 7b der beiden Klemmschenkel 1a, 1b einander zugewandt sind. Auch die Klemmvorsprünge 7a, 7b können somit durch einen Biegevorgang gefertigt werden, wobei sich an den einander abgewandten Außenflächen der Klemmschenkel 1a, 1b jeweils eine parallel zur Querachse Q der Klemmschenkel 1a, 1b verlaufende, nutförmige Vertiefung bildet.

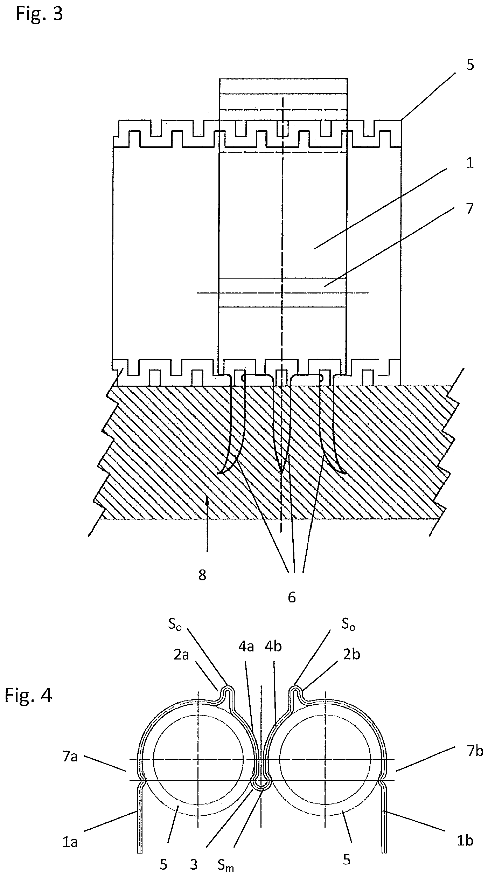

Im Zuge der Befestigung von Rohr- oder Schlauchleitungen 5 auf Baukörper 8 wie beispielsweise Trockenbauwände, insbesondere Gipskartonwände, wird die Klemmvorrichtung auf die zu befestigende Rohr- oder Schlauchleitung 5 gesteckt, sodass die einander zugewandten Klemmflächen der Klemmschenkel 1a, 1b an der Rohr- oder Schlauchleitung 5 anliegen. In weiterer Folge werden die nagelförmigen Fortsätze 6 mit Schlägen auf die seitlichen Biegebereiche 2 der Klemmvorrichtung in den Baukörper 8 eingetrieben (siehe Fig. 3).

Da die beiden seitlichen Biegebereiche 2 den mittleren Biegebereich 3 überragen, bilden sie dabei die Schlagschultern für diese Schlagmontage. Die Verbindung der beiden Klemmschenkel 1a, 1b wird über den mittleren Biegebereich 3 hergestellt, der aber bei der Schlagmontage nicht getroffen wird. Der Biegeradius des mittleren Biegebereiches 3 kann daher so gewählt werden, dass der mit zunehmendem Durchmesser der zu befestigenden Rohr- oder Schlauchleitungen 5 wachsende Abstand der beiden Klemmschenkel 1a, 1b optimal überbrückt wird, indem er entsprechend erhöht wird. Der Biegeradius der seitlichen Biegebereiche 2a, 2b kann wiederum so gewählt werden, dass sie bei der Schlagmontage optimal belastbar sind, indem er entsprechend klein gewählt wird. Somit kann auch bei zunehmendem Leitungsdurchmesser eine unveränderte Ableitung der auf den Mittelteil eingebrachten Schlagkräfte auf die seitlichen Klemmschenkel 1a, 1b und deren nagelförmige Fortsätze 6 sichergestellt werden.

Die erfindungsgemäßen Merkmale der Klemmflächen und der unterschiedlichen Höhe der Scheitellinien Sₒ, Sₘ von seitlichem Biegebereich 2 und mittlerem Biegebereich 3 führen ferner zur Möglichkeit der Ausführung vorteilhafter Varianten der gegenständlichen Schlagschelle, wie beispielsweise einer Doppelschelle zur simultanen Befestigung zweier Rohr- oder Schlauchleitungen 5 gemäß Fig. 4. Die obersten Punkte der seitlichen Biegebereiche 2 bilden dabei wiederum die jeweilige Scheitellinie Sₒ der seitlichen Biegebereiche 2. Die Scheitellinien Sₒ der seitlichen Biegebereiche 2 weisen dabei einen größeren Abstand zu den nagelförmigen Fortsätzen 6 auf (in der Fig. 4 nicht mehr eingezeichnet), als die Scheitellinie Sₘ des mittleren Biegebereiches 3. Die Scheitellinien Sₒ der seitlichen Biegebereiche 2 liegen somit oberhalb der Scheitellinie Sₘ des mittleren Biegebereiches 3. Die seitlichen Biegebereiche 2a, 2b gehen wiederum über einen verbindenden Biegebereich 4a, 4b in den mittleren Biegebereich 3 über, wobei die verbindenden Biegebereiche 4 jeweils einen zu den Klemmflächen parallelen Abschnitt aufweisen. Aufgrund der unterschiedlich hoch liegenden Scheitellinien Sₒ, Sₘ von seitlichen Biegebereichen 2 und mittlerem Biegebereich 3 wird eine gleichzeitige Montage von zwei Rohr- oder Schlauchleitungen 5 ermöglicht, wobei die beiden Rohr- oder Schlauchleitungen 5 während der Montage mithilfe der Klemmvorsprünge 7 und dem entsprechend geformten mittleren Biegebereich 3 zwischen den Klemmflächen der Klemmschenkel 1a, 1b und den zu den Klemmflächen parallelen Abschnitten der verbindenden Biegebereiche 4a, 4b festgeklemmt werden können. Da die beiden seitlichen Biegebereiche 2 den mittleren Biegebereich 3 überragen, bilden sie wiederum die Schlagschultern für die Schlagmontage. Die Verbindung der beiden Klemmschenkel 1a, 1b wird wiederum über den mittleren Biegebereich 3 hergestellt, der aber bei der Schlagmontage nicht getroffen wird.

## Patentansprüche

1. Klemmvorrichtung zur Befestigung von Rohr- oder Schlauchleitungen (5) auf einem Baukörper (8) mit zwei seitlichen, bandförmigen Klemmschenkeln (1a, 1b), die parallel zueinander ausgerichtet sind und zwei einander zugewandte Klemmflächen zur Aufnahme der Rohr- oder Schlauchleitung (5) aufweisen, wobei die beiden seitlichen Klemmschenkel (1a, 1b) über einen bandförmigen Mittelteil verbunden sind und an ihren freien Enden jeweils zumindest einen nagelförmigen Fortsatz (6) aufweisen, und die Klemmschenkel (1a, 1b) jeweils über seitliche Biegebereiche (2a, 2b) in einen mittleren Biegebereich (3) des Mittelteils übergehen, wobei die Scheitellinien (Sₒ) der seitlichen Biegebereiche (2a, 2b) und die Scheitellinien (Sₘ) des mittleren Biegebereiches (3) jeweils parallel zur Querachse (Q) der Klemmschenkel (1a, 1b) verlaufen, und die Scheitellinien (Sₒ) der seitlichen Biegebereiche (2a, 2b) einen größeren Abstand zu den nagelförmigen Fortsätzen (6) aufweisen als die Scheitellinie (Sₘ) des mittleren Biegebereiches (3), **dadurch gekennzeichnet, dass** die beiden Klemmschenkel (1a, 1b) auf ihren einander zugewandten Klemmflächen jeweils einen den Abstand der Klemmflächen verringernden Klemmvorsprung (7a, 7b) zum Aufstecken auf die Rohr- oder Schlauchleitung (5) aufweisen, der jeweils als nutförmige Biegezone des jeweiligen Klemmschenkels (1a, 1b) ausgeführt ist, wobei die Scheitellinien der nutförmigen Biegezonen der beiden Klemmschenkel (1a, 1b) einander zugewandt sind.

2. Klemmvorrichtung nach Anspruch 1, **dadurch gekennzeichnet, dass** die seitlichen Biegebereiche (2a, 2b) einen Biegewinkel von 180° aufweisen.

3. Klemmvorrichtung nach Anspruch 1 oder 2, **dadurch gekennzeichnet, dass** die seitlichen Biegebereiche (2a, 2b) jeweils über einen verbindenden Biegebereich (4a, 4b) in den mittleren Biegebereich (3) übergehen, wobei die Scheitellinien (Sᵤ) der verbindenden Biegebereiche (4a, 4b) einen geringeren Abstand zu den nagelförmigen Fortsätzen (6) aufweisen als die Scheitellinie (Sₘ) des mittleren Biegebereiches (3).

4. Klemmvorrichtung nach Anspruch 3, **dadurch gekennzeichnet, dass** der Biegeradius der seitlichen Biegebereiche (2a, 2b) kleiner ist als der Biegeradius der verbindenden Biegebereiche (4a, 4b), und der Biegeradius der verbindenden Biegebereiche (4a, 4b) kleiner ist als der Biegeradius des mittleren Biegebereiches (3).

## Claims

1. Clamping device for fastening pipe or hose lines (5) to a structural body (8), having two lateral, strip-shaped clamping legs (1a, 1b) which are aligned parallel to one another and have two mutually facing clamping surfaces for accommodating the pipe or hose line (5), wherein the two lateral clamping legs (1a, 1b) are connected via a strip-shaped central part and each have at least one nail-shaped protrusion (6) at their free ends, and the clamping legs (1a, 1b) each merge via lateral bending regions (2a, 2b) into a central bending region (3) of the central part, wherein the apex lines (Sₒ) of the lateral bending regions (2a, 2b) and the apex lines (Sₘ) of the central bending region (3) each run parallel to the transverse axis (Q) of the clamping legs (1a, 1b), and the apex lines (Sₒ) of the lateral bending regions (2a, 2b) have a greater distance from the nail-shaped protrusions (6) than the apex line (Sₘ) of the central bending region (3), **characterized in that** the two clamping legs (1a, 1b) each have, on their clamping surfaces facing one another, a clamping projection (7a, 7b) which reduces the distance between the clamping surfaces and is intended for fitting onto the pipe or hose line (5) and is designed in each case as a groove-shaped bending zone of the respective clamping leg (1a, 1b), wherein the apex lines of the groove-shaped bending zones of the two clamping legs (1a, 1b) face one another.

2. Clamping device according to claim 1, **characterized in that** the lateral bending zones (2a, 2b) have a bending angle of 180°.

3. Clamping device according to claim 1 or 2, **characterized in that** the lateral bending regions (2a, 2b) each merge into the central bending region (3) via a connecting bending region (4a, 4b), wherein the apex lines (Sᵤ) of the connecting bending regions (4a, 4b) have a smaller distance to the nail-shaped protrusions (6) than the apex line (Sₘ) of the central bending region (3).

4. Clamping device according to claim 3, **characterized in that** the bending radius of the lateral bending regions (2a, 2b) is smaller than the bending radius of the connecting bending regions (4a, 4b), and the bending radius of the connecting bending regions (4a, 4b) is smaller than the bending radius of the central bending region (3).

## Revendications

1. Dispositif de serrage pour la fixation de conduites rigides ou flexibles (5) sur un bâtiment (8), comportant deux branches de serrage (1a, 1b) latérales en forme de bande, qui sont orientées parallèlement l'une à l'autre et présentent deux surfaces de serrage tournées l'une vers l'autre pour recevoir la conduite rigide ou flexible (5), dans lequel les deux branches de serrage latérales (1a, 1b) sont reliées par une partie centrale en forme de bande et présentent chacune à leur extrémité libre au moins un prolongement (6) en forme de clou, et les branches de serrage (1a, 1b) se raccordent par des zones de courbure latérales respectives (2a, 2b) à une zone de courbure centrale (3) de la partie centrale, les lignes de sommet (Sₒ) des zones de courbure latérales (2a, 2b) et les lignes de sommet (Sₘ) de la zone de courbure centrale (3) s'étendent respectivement parallèlement à l'axe transversal (Q) des branches de serrage (1a, 1b), et les lignes de sommet (Sₒ) des zones de courbure latérales (2a, 2b) présentent une distance plus grande par rapport aux prolongements en forme de clous (6) que la ligne de sommet (Sₘ) de la zone de courbure centrale (3),
**caractérisé en ce que** les deux branches de serrage (1a, 1b) présentent chacune sur leurs surfaces de serrage tournées l'une vers l'autre une saillie de serrage (7a, 7b) réduisant la distance entre les surfaces de serrage pour le montage sur la conduite rigide ou flexible (5), qui est réalisée chaque fois sous la forme d'une zone de courbure en forme de rainure de la branche de serrage respective (1a, 1b), les lignes de sommet des zones de courbure en forme de rainure des deux branches de serrage (1a, 1b) étant tournées l'une vers l'autre.

2. Dispositif de serrage selon la revendication 1, **caractérisé en ce que** les zones de courbure latérales (2a, 2b) présentent un angle de courbure de 180°.

3. Dispositif de serrage selon la revendication 1 ou 2, **caractérisé en ce que** les zones de courbure latérales (2a, 2b) se raccordent par des zones de courbure de liaison respectives (4a, 4b) à la zone de courbure centrale (3), dans lequel les lignes de sommet (Sᵤ) des zones de courbure de liaison (4a, 4b) présentent une distance plus faible par rapport aux prolongements en forme de clous (6) que la ligne de sommet (Sₘ) de la zone de courbure centrale (3).

4. Dispositif de serrage selon la revendication 3, **caractérisé en ce que** le rayon de courbure des zones de courbure latérales (2a, 2b) est inférieur au rayon de courbure des zones de courbure de liaison (4a, 4b), et le rayon de courbure des zones de courbure de liaison (4a, 4b) est inférieur au rayon de courbure de la zone de courbure centrale (3).
